# EUROPÄISCHE PATENTANMELDUNG

(11) **EP 0 539 873 A2**
(43) Veröffentlichungstag der Anmeldung: **05.05.1993**
(21) Anmeldenummer: 92118139.2
(22) Anmeldetag: 23.10.1992
(51) Int. Cl.: B60P 1/00, B62D 33/08, B60J 7/08

(54) **Ladefläche an einem Nutzfahrzeug**

(30) Priorität: 30.10.1991 DE 9113503 U
(71) Anmelder: AVU AKTIENGESELLSCHAFT FÜR VERSORGUNGSUNTERNEHMEN, D-58285 Gevelsberg (DE)
(72) Erfinder: Wesendrup, Rudolf, W-5802 Wetter-Volmarstein (DE); Kamp, Josef, W-4407 Emsdetten (DE)
(74) Vertreter: Patentanwälte Wenzel & Kalkoff

(57) **Zusammenfassung**

Die Erfindung betrifft eine Ladefläche an einem Nutzfahrzeug, mit einem stirnseitigen und rückseitigen Aufbau (2,3), zwischen denen sich ein Dach (4) erstreckt, und mit seitlichen, an einem Dach befestigten Planen, die zum Freilegen der Seiten aufrollbar oder nach Art eines Faltrollos aufziehbar sind. Das Dach (4) ist zusammen mit den Planen gegenüber der Ladefläche anhebbar. Das Anheben des Daches erfolgt beliebig mittels Hydraulikzylindern (10), Pneumatikzylindern, mittels Seilwinde oder auf andere Weise. Am Ladeflächenaufbau befindliche vertikale Führungskanäle sowie am Dach angebrachte Führungssäulen sichern die Lage des Daches in der angehobenen Position.

## Beschreibung

Die Erfindung betrifft eine Ladefläche an einem Nutzfahrzeug, mit einem stirnseitigen und rückseitigen Aufbau, zwischen denen sich ein Dach erstreckt, und mit seitlichen, an dem Dach befestigten Planen, die zum Freilegen der Seiten aufrollbar oder nach Art eines Faltrollos aufziehbar sind.

Derartige Ladeflächen finden sich an Lastkraftwagen, an Sattelschleppern und Anhängern, um das geladene Gut gegen Witterungseinflüsse zu schützen und auch um das Wegfliegen von leichten Gegenständen infolge des Fahrtwindes zu verhindern. Bei Gütern, die von der Seite der Ladefläche beladen werden können oder müssen, hat sich die vorangehend genannte Konstruktion einer Ladefläche bewährt, weil bei aufgezogener Plane beinahe die gesamte Seite beispielsweise für einen Gabelstapler zugängig ist. Dies gilt sowohl für eine Beladung auf Paletten als auch für eine direkte Beladung, beispielsweise bei dem Transport von Altpapierballen.

Insbesondere bei leichtgewichtigen Gütern kommt es darauf an, daß das Ladevolumen einer Ladefläche vollständig ausgenutzt wird, also eine Beladung bis unmittelbar unter das Dach erfolgt. Eine derartige Beladung ist mit den herkömmlichen Ladeflächen nur sehr schlecht möglich. Zum einen muß dann die auch im aufgezogenen Zustand noch leicht herabhängende Plane einer Seite auf das Dach aufgelegt werden, zum anderen kann der Zwischenraum zwischen der eigentlichen Ladefläche und dem Dach als Packhöhe niemals voll genutzt werden, weil für das eigentliche Beladen ausreichend Spielräume gelassen werden müssen; nicht immer liegt eine Ladefläche horizontal im Raum und oftmals fährt ein Gabelstapler auf unebenem Gelände heran, so daß zwischen der Ladefläche und den Gabelzinken eines Gabelstaplers Winkelabweichungen vorhanden sind.

Es ist Aufgabe der Erfindung, eine Ladefläche der eingangs genannten Art so zu verbessern, daß die Ladehöhe auch bei einer seitlichen Beladung durch Gabelstapler vollständig ausgenutzt werden kann.

Zur Lösung dieser Aufgabe schlägt die Erfindung vor, daß das Dach zusammen mit den Planen gegenüber der Ladefläche anhebbar ist. Die Hubhöhe beträgt z.B. 1 m. Wenn im aufgefahrenen Zustand die Plane mit ihrer Unterkante ca. 30 cm unterhalb der Dachfläche liegt, ist bei dieser Hubhöhe ein Raumgewinn nach oben von 70 cm erzielbar, wodurch die genannten Schwierigkeiten bei der Beladung einer Ladefläche in der maximalen Höhe beseitigt sind.

In der Grundstellung liegt das Dach mit seinem vorderen und hinteren Ende jeweils auf dem Aufbau am stirnseitigen und rückwätigen Ende der Ladefläche auf, und es bedarf keiner weiteren Sicherung, um die stabile Lage beizubehalten. Es kann lediglich zweckmäßig sein, auf jeder Seite in der Mitte eine entfernbare Stütze vorzusehen, so daß das Dach nicht ungehindert schwingen kann. Es genügt eine dünne Rohrstütze, die mit entsprechenden Zapfen zwischen das Dach und die Ladefläche gesteckt wird. In der angehobenen Position sorgen Führungen für einen sicheren Halt des Daches, wobei insbesondere an jedem Aufbau zwei vertikale Führungskanäle vorhanden sind, in die an dem Dach befestigte Führungssäulen eintauchen. Es genügt eine Führung mit Hilfe von ineinandergesteckten Vierkant- oder Rundrohren.

Das Dach gemäß der Erfindung wird vorzugsweise mit Hilfe von zwei Hydraulikzylindern angehoben, wobei selbstverständlich auch Pneumatikzylinder eingesetzt werden können oder eine Seilanordnung, die mit Hilfe einer Winde betätigt wird. Der innere Anschlag des Zylinders genügt als obere Hubbegrenzung, das einfache Absperren der Zuleitung bei ausgefahrenem Zylinder ist eine ausreichende Sicherung in der angehobenen Position.

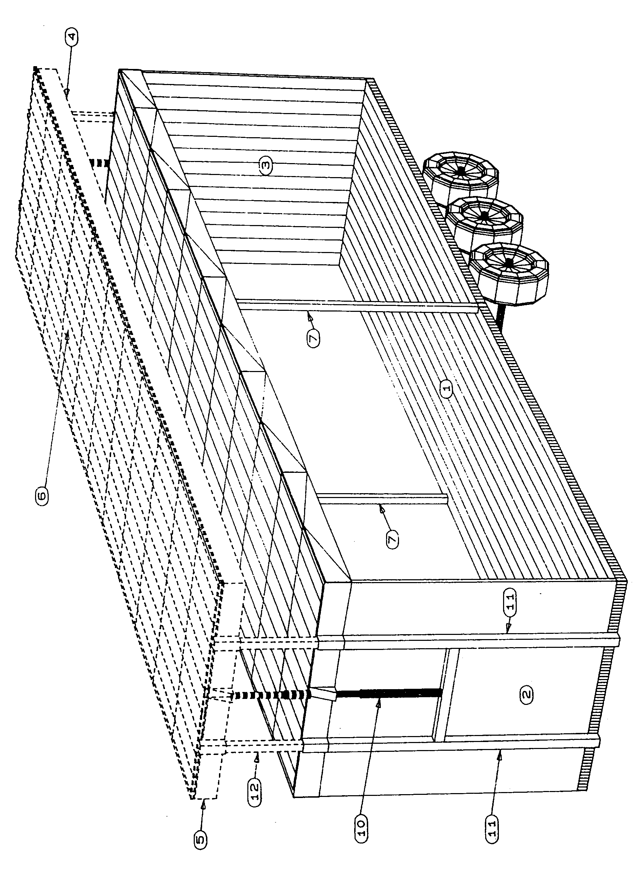

Nachfolgend wird ein Ausführungsbeispiel, das in der Zeichnung dargestellt ist, näher erläutert; die einzige Figur der Zeichnung zeigt:
eine perspektivische Ansicht einer Ladefläche gemäß der Erfindung, die z.B. Bestandteil eines Sattelschleppers ist.

Auf der einzigen Figur der Zeichnung ist eine Ladefläche 1 abgebildet, die an ihrer Stirnseite und an ihrer Rückseite einen vertikalen Aufbau 2 und 3 trägt. Dieser besteht im wesentlichen aus einer Stahlplatte mit entsprechenden Verstärkungen, so daß eine winkelsteife Verbindung zu der Ladefläche und eine ausreichende Stabilität in sich vorhanden ist. Auf den Aufbauten 2 und 3 liegt ein Dach 4 auf, das aus einem rechteckigen Rahmen 5 gebildet ist, der mit Hilfe von Blechtafeln 6 abgedeckt ist. Die Blechtafeln 6 bestehen aus einer Aluminiumlegierung und sind durch Kanten eigensteif ausgebildet.

Jeder Aufbau 2 und 3 ist mit Führungskanälen 11 in Form von rechteckigen Schächten versehen, in die jeweils Säulen 12 eintauchen, die an dem Dach 4 befestigt sind. Jeder Führungskanal 11 und jede Führungssäule 12 bilden zusammen eine spielbehaftete, ausreichend exakte Führung, um das Dach in abgesenktem und angehobenem Zustand exakt zu den Aufbauten 2 und 3 zu positionieren. In der Mitte zwischen einem Paar von Führungskanälen 11 befindet sich ein Hydraulikzylinder 10, der beispielsweise eine Hubhöhe von 1 m aufweist und in der Lage ist, mit Hilfe des von einer Elektropumpe erzeugten Hydraulikdruckes das Dach 4 zusammen mit dem anderen Zylinder anzuheben. Die höchste Hubhöhe ergibt sich durch die inneren Anschlag des Hydraulikzylinders 10. Dabei sind die Führungen 11 und 12 noch hinreichend ineinandergesteckt, so daß es keine Verkantungen oder Verklemmungen geben kann.

In der Figur ist die Ladefläche 1 mit ihrem gesamten Geschirr im Leerzustand gezeigt, wobei seitlich vorhandene Planen nicht dargestellt sind, die die Seitenflächen vollständig abdecken. Die Planen können mit Hilfe von Gummibändern am unteren Ende gespannt werden und mit Hilfe eines eingelassenen Knebels bis zur Höhe des Rahmens 5 aufgewickelt werden. Die gesamte Aufwickelvorrichtung befindet sich also an dem Dach 4. Sie wird beim Anheben des Daches 4 mit angehoben, so daß alle mit dem Anheben der Planen in Verbindung stehenden Bauteile mit angehoben werden. Durch das Anheben des Daches 4 entsteht oberhalb der Ladefläche 1 ein freier Raum, der das unbekümmerte Beladen mit einem Gabelstapler von der Seite her erlaubt, und zwar mit Gütern, die die tatsächliche Innenhöhe von der Ladefläche 1 bis zum Dach 4 aufweisen.

Nach dem Beladen wird das Dach wieder abgesenkt, und zwar durch einfaches Ablassen des Hydraulikdruckes aus den Hydraulikzylindern 10. Dadurch senkt sich das Dach 4 infolge des Eigengewichtes selbsttätig ab. Wenn es dabei stellenweise auf die Ladung drückt, spielt das keine Rolle; im Gegenteil wird dadurch die Neigung zu Schwingungen vermindert. Das Aufliegen auf der Ladung ist allerdings nur dann möglich, wenn diese unempfindlich ist und sich relativ leicht zusammendrücken läßt, wie z.B. bei Altpapierballen.

Wenn das Dach nach dem Beladen oder im Leerzustand der Ladefläche 1 vollkommen freiliegt, wird es etwa in der Mitte auf jeder Seite mit Hilfe von Stützen 7 stabilisiert, insbesondere an Biegungsschwingungen gehindert. Die Stützen 7 müssen beim Absenken des Daches 4 in entsprechende Öffnungen eingefädelt werden, was jedoch bei geübtem Personal keine Schwierigkeit bedeutet. Der Steckzapfen (nicht dargestellt) an der Oberseite jeder Stütze 7 wird länger ausgebildet als der Steckzapfen (nicht dargestellt) an der Unterseite, so daß bei noch nicht ganz abgesenktem, jedoch kurz angehaltenem Dach jede Stütze 7 zunächst in das Dach 4 und dann in die Ladefläche 1 eingesteckt wird. Infolge der Überlänge der oberen Steckverbindung bleibt die Stütze 7 in ihrer Lage; nach Abschluß der vollständigen Absenkung ist jede Stütze 7 fest eingespannt.

Wenn das Absenken des Daches 4 zum Einbringen der Stützen 7 nicht unterbrochen werden soll, kann jede Stütze 7 so ausgebildet sein, daß sie aus zwei ineinandergesteckten Rohren besteht, wobei die kürzeste Länge, die der Stützlänge entspricht, durch einen Anschlag vorgegeben ist, und daß eine Feder vorgesehen ist, die eine elastische Verlängerung der Stütze 7 bewirkt. Dadurch kann während des Absenkens die teleskopartig verkürzbare Stütze in die entsprechenden Stecklöcher eingesteckt werden, weil sie sich infolge ihrer eigenen Spreiztendenz selbsttätig zwischen den Stecklöchern hält.

Der Rahmen 5 des Daches 4 ist im wesentlichen als Kastenrahmen ausgeführt, der also auch ohne die Blechtafeln 6 in sich ausreichend eigensteif ist. Selbstverständlich kann als Dach 4 eine Struktur gewählt werden, die die Dachhaut als integralen Bestandteil mit einschließt, es kommt lediglich darauf an, daß eine ausreichende Stabilität vorhanden ist, um ein sicheres Anheben des Daches bei einer Stützung an den beiden Schmalseiten herbeizuführen.

## Patentansprüche

1. Ladefläche an einem Nutzfahrzeug, mit einem stirnseitigen und rückseitigen Aufbau, zwischen denen sich ein Dach erstreckt, und mit seitlichen, an dem Dach befestigten Planen, die zum Freilegen der Seiten aufrollbar oder nach Art eines Faltrollos aufziehbar sind, dadurch **gekennzeichnet**, daß das Dach (4) zusammen mit den Planen gegenüber der Ladefläche (1) anhebbar ist.

2. Ladefläche nach Anspruch 1, dadurch **gekennzeichnet**, daß jeder Aufbau (2, 3) zwei vertikale Führungskanäle (11) trägt, die mit entsprechenden Führungssäulen (12) an dem Dach (4) zusammenwirken.

3. Ladefläche nach Anspruch 1 oder 2, dadurch **gekennzeichnet**, daß jeder Aufbau (2, 3) mindestens einen Pneumatik- oder Hydraulikzylinder (10) oder eine Seilanordnung zum Anheben des Daches (4) trägt.

4. Ladefläche nach einem der vorhergehenden Ansprüche, dadurch **gekennzeichnet**, daß das Dach (4) um ca. 1 m anhebbar ist.

5. Ladefläche nach einem der vorhergehenden Ansprüche, dadurch **gekennzeichnet**, daß auf jeder Seite mindestens eine entfernbare Stütze (7) zwischen der Ladefläche (1) und dem Dach (4) angeordnet ist.

6. Ladefläche nach einem der vorhergehenden Ansprüche, dadurch **gekennzeichnet**, daß das Dach als rechteckiger Rahmen (5) ausgebildet ist, der mit Hilfe von gekanteten Blechtafeln (6) abgedeckt ist.

7. Ladefläche nach Anspruch 6, dadurch **gekennzeichnet**, daß die Blechtafeln (6) aus Aluminium oder einer Aluminiumlegierung bestehen.

8. Ladefläche nach einem der vorhergehenden Ansprüche, dadurch **gekennzeichnet**, daß jede Stütze (7) aus zwei ineinandergesteckten Rohren besteht, daß die kürzeste Länge, die der Stützlänge entspricht, durch einen Anschlag vorgegeben ist, und daß eine Feder vorgesehen ist, die eine elastische Verlängerung der Stütze (7) bewirkt.
